# EUROPÄISCHE PATENTSCHRIFT

(11) **EP 1 679 729 B1**
(45) Veröffentlichungstag und Bekanntmachung des Hinweises auf die Patenterteilung: **02.07.2008**
(21) Anmeldenummer: 06101384.3
(22) Anmeldetag: 15.02.2001
(51) Int. Cl.: F02D 41/26, G05B 9/03, H01H 27/00

(54) **Vorrichtung zur sicheren Signalerzeugung**
Method for secure signal generation
Dispositif destiné à une émission de signal sûre

(30) Priorität: 09.03.2000 DE 10011410
(43) Veröffentlichungstag der Anmeldung: 12.07.2006
(62) Teilanmeldung aus: 01913641.5
(73) Patentinhaber: ROBERT BOSCH GMBH, 70442 Stuttgart (DE)
(72) Erfinder: Schenk, Joachim, 38536 Seershausen (DE); Breunig, Volker, 71254 Ditzingen (DE); Schmidt, Frank, 3169 Clayton, Vic (AU); Mahler, Achim, 77694 Kehl (DE); Wenzel, Karl, 70499 Stuttgart (DE); Owerfeldt, Andre, 71706 Markgroeningen (DE)

(56) Entgegenhaltungen:
- EP-A- 0 034 839
- DE-A1- 19 738 015
- US-A- 5 559 438

## Beschreibung

### Stand der Technik

Die Erfindung geht aus von einer Vorrichtung zur sicheren Signalerzeugung nach der Gattung des unabhängigen Anspruchs. Sicherheitskritische Signale werden in heutigen Systemen direkt auf die Signalsenke geschaltet wie beispielsweise Klemmensteuerungssignale des Zündanlassschalters. Soll jedoch ein sicherheitskritisches Signal durch einen Mikrocontroller erzeugt werden, muss sichergestellt werden, dass dessen sicherheitskritisches Ausgangssignal beim Auftreten eines Einfachfehlers einer Komponente im System nicht in einen falschen Zustand wechselt oder nicht mehr von dem einen Zustand in einen anderen Zustand umgeschaltet werden kann.

Aus der US-A-5 559 438 ist ein Sicherheitsschalter bekannt, der eine Reihen- oder Parallelschaltung zweier einfacher Schalter umfasst und der zur störungssicheren Ansteuerung einer sicherheitsrelevanten Last dient. Jeder der Schalter des Sicherheitsschalters enthält ein Element zur Messung des Stromes durch den Schalter im Falle einer Parallelschaltung bzw. zur Messung der Spannung über den Schalter im Falle einer Reihenschaltung. Ein Überwachungsschaltkreis empfängt die Informationen der Messelemente und stellt ein Ansteuersignal für jeden Schalter bereit, wobei diese aktiviert werden, wenn die gemessene Spannung hoch bzw. der gemessene Strom gering ist, und deaktiviert werden, wenn die gemessene Spannung gering bzw. der gemessene Strom hoch ist.

Es ist daher Aufgabe der Erfindung, die Sicherheit der Signalbereitstellung durch einen Mikrocontroller zu erhöhen.

Diese Aufgabe wird gelöst durch die Merkmale des unabhängigen Anspruchs.

### Vorteile der Erfindung

Die erfindungsgemäße Vorrichtung zur sicheren Signalerzeugung umfasst ein Steuermittel, dem ein Steuersignal zugeführt ist, wobei das Steuermittel in Abhängigkeit von dem Steuersignal zumindest ein erstes und ein zweites Ansteuersignal erzeugt zur Ansteuerung eines Schaltmittels, das eine Last aktiviert oder deaktiviert. Es sind Erkennungsmittel vorgesehen zum Erkennen eines ordnungsgemäßen Betriebs des Schaltmittels, wobei die Erkennungsmittel in Abhängigkeit von dem ordnungsgemäßen Betrieb des Schaltmittels das zumindest eine erste und zweite Ansteuersignal beeinflussen. Um die Sicherheit weiter zu erhöhen, umfasst das Schaltmittel zumindest zwei parallele Pfade mit zumindest jeweils zwei in Reihe verschalteten Schaltmitteln. Erfindungsgemäß ist vorgesehen dass das erste Ansteuersignal ein Schaltmittel des ersten Pfades und hierzu invertiert über einen ersten Inverter ein Schaltmittel des zweiten Pfades ansteuert. In vorteilhafter Weise wird dadurch erreicht, dass nur eines der beiden Steuersignale fehlersicher sein muss.

Weitere zweckmäßige Weiterbildungen ergeben sich aus der Beschreibung.

### Zeichnung

Die Ausführungsbeispiele der Erfindung sind in der Zeichnung dargestellt und werden im Folgenden näher beschrieben.

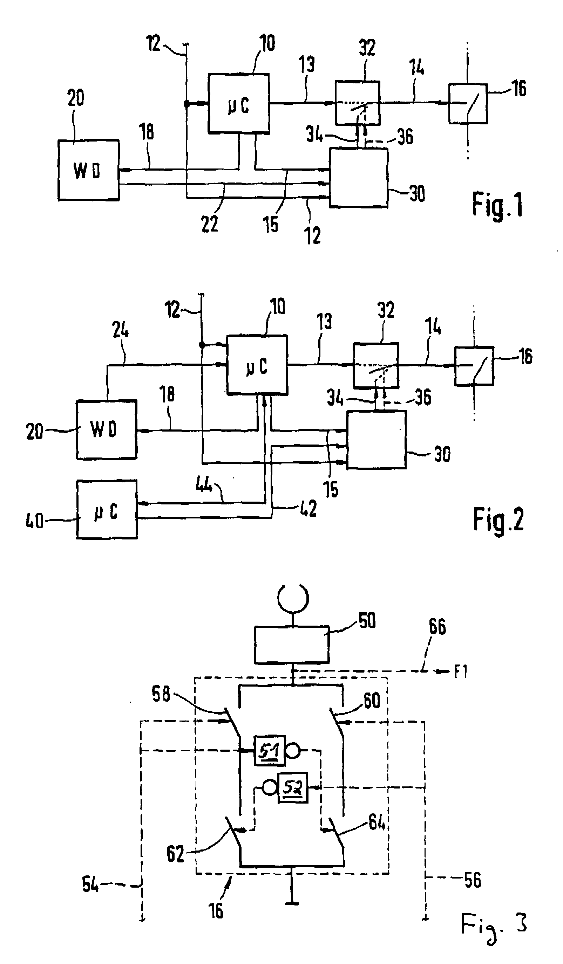

Es zeigen die Figuren 1 bis 3 Blockschaltbilder mehrerer Ausführungsbeispiele der erfindungsgemäßen Vorrichtung zur sicheren Signalerzeugung.

### Beschreibung der Ausführungsbeispiele

Einem Steuermittel 10 und einem Notlaufmittel 30 ist ein Steuersignal 12 zugeführt. Das Steuermittel 10 erzeugt ein Ausgangssignal 13, das dem Notlaufschaltmittel 32 zugeführt wird. Ein von dem Steuermittel 10 bereitgestelltes Triggersignal 18 wird von einem Uberwachungsmittel 20 verarbeitet. Das Steuermittel 10 erzeugt weiterhin ein Notlaufansteuersignal 15 für das Notlaufmittel 30. Das Notlaufmittel 30 erhält außerdem ein von einem Überwachungsmittel 20 erzeugtes Überwachungsausgangssignal 22. Das Notlaufmittel 30 erzeugt ein Notlaufausgangssignal 34 und ein Notlaufsteuersignal 36. Über das Notlaufsteuersignal 36 lässt sich das Notlaufschaltmittel 32 in seiner Schalterstellung verändern. In der einen Schalterstellung leitet das Notlaufschaltmittel 32 das Ausgangssignal 13 des Steuermittels 10 als Ansteuersignal 14 an ein Schaltmittel 16 weiter. In der anderen Schalterstellung leitet das Notlaufschaltmittel 32 das Notlaufausgangssignal 34 des Notlaufmittels 30 als Ansteuersignal 14 an das Schaltmittel 16 weiter. Mit dem durch das Ansteuersignal 14 geschalteten Schaltmittel 16 lässt sich eine sicherheitsrelevante Komponente aktivieren bzw. deaktivieren.

Bei dem Ausführungsbeispiel gemäß Figur 2 sind dem Steuermittel 10 das Steuersignal 12 und ein Reset-Signal 24, das von dem Überwachungsmittel 20 erzeugt wird, zugeführt. Das Steuermittel 10 gibt wiederum das Ausgangssignal 13 an das Notlaufschaltmittel 32, das Triggersignal 18 an das Überwachungsmittel 20 sowie das Notlaufansteuersignal 15 an das Notlaufmittel 30 ab. Wie bereits im Zusammenhang mit dem Ausführungsbeispiel gemäß Figur 1 beschrieben, gibt das Notlaufmittel 30 das Notlaufsignal 34 und das Notlaufsteuersignal 36 an das Notlaufschaltmittel 32 ab, dessen Ausgangssignal als Ansteuersignal 14 dem Schaltmittel 16 zur Ansteuerung zugeführt wird. Es ist ein zweites Steuermittel 40 vorgesehen, das über eine Kommunikationsleitung 44 Daten austauscht mit dem Steuermittel 10. Ein Notlaufansteuersignal 42 des zweiten Steuermittels 40 wird an das Notlaufmittel 30 abgegeben.

Im Ausführungsbeispiel gemäß Figur 3 gelangt ein erstes Ansteuersignal 54 sowohl an einen ersten Inverter 51 als auch an ein erstes Schaltmittel 58. Mit dem Ausgangssignal des ersten Inverters 51 wird ein viertes Schaltmittel 64 gesteuert. Ein zweites Ansteuersignal 56 wird sowohl einem zweiten Schaltmittel 60 als auch einem zweiten Inverter 52 zugeführt. Das Ausgangssignal des zweiten Inverters 52 dient für das dritte Schaltmittel 62 als Ansteuersignal. Das erste Schaltmittel 58 und das dritte Schaltmittel 62 sind in Serie geschaltet ebenfalls wie das zweite Schaltmittel 60 und das vierte Schaltmittel 64. Das erste Schaltmittel 58 und das dritte Schaltmittel 62 sind parallel verschaltet zu den in Serie liegenden zweiten und vierten Schaltmitteln 60, 64. Die gemeinsamen Potentiale des dritten und vierten Schaltmittels 62, 64 sind (beispielhaft) mit Masse, die gemeinsamen Potentiale des ersten und zweiten Schaltmittels 58, 60 (beispielhaft) mit der Last 50 verbunden. Zur Erfassung des Signals, mit dem die Last 50 angesteuert wird, ist eine Rückführleitung 66 vorgesehen.

Das Ausführungsbeispiel gemäß Figur 1 wird beispielsweise für die sichere Signalerzeugung für einen Zündanlassschalter in einem Kraftfahrzeug verwendet. Das entsprechende Signal des gewünschten Zündungszustands gelangt als Steuersignal 12 sowohl an das Steuermittel 10 als auch an das Notlaufmittel 30. Das Steuermittel 10 verarbeitet das eingehende Steuersignal 12 gegebenenfalls unter Zuhilfenahme weiterer Informationen. In dem Steuermittel 10 ist beispielsweise eine Start/Stop-Automatik realisiert, die die Zündung (als Beispiel für eine Last 50) bei Vorliegen bestimmter Bedingungen automatisch deaktiviert oder aktiviert. Das Steuermittel 10 erzeugt deshalb in Abhängigkeit von dem Steuersignal 12 ein Ausgangssignal 13, mit dem im Normalbetrieb das Schaltmittel 16 angesteuert wird beispielsweise zur Aktivierung bzw. Deaktivierung der Zündung.

Da es sich bei der Zündung um eine sicherheitskritische Funktion handelt, muss das Schaltmittel 16 auch dann korrekt angesteuert werden, wenn das Steuermittel 10 nicht ordnungsgemäß arbeitet. Hierzu ist erfindungsgemäß das Notlaufmittel 30 mit zugehörigem Notlaufschaltmittel 32 vorgesehen. Im Fehlerfall des Steuermittels 10 steuert das Notlaufmittel 30 das Notlaufschaltmittel 32 in der Weise an, dass das Notlaufschaltmittel 32 nicht mehr das Ausgangssignal 13 des Steuermittels 10 als Ansteuersignal 14 für das Schaltmittel 16 durchschleift, sondern das Notlaufausgangssignal 34. Bei dem Notlaufausgangssignal 34 handelt es sich um den entsprechenden Zustand des Steuersignals 12. Im einfachsten Fall wird das Steuersignal 12 über das Notlaufmittel 30 einfach als Notlaufausgangssignal 34 durchgeschleift. Es könnte jedoch in dem Notlaufmittel 30 auch eine zusätzliche Logik integriert sein, die das Steuersignal 12 in Abhängigkeit bestimmter Bedingungen in das Notlaufausgangssignal 34 umsetzt.

Das Notaufschaltmittel 32 wird dann zum Weiterleiten des Notlaufausgangssignals 34 als Ansteuersignal umgeschaltet, wenn ein fehlerhafter Betrieb des Steuermittels 10 erkannt wurde. Die Notlauffunktion des Notlaufmittels 30 können entweder das Steuermittel 10 selbst oder das Überwachungsmittel 20 aktivieren. In dem Steuermittel 10 ist hierzu eine Eigendiagnosefunktion integriert, um die eigene Funktionsfähigkeit zu überwachen. Erkennt das Steuermittel 10 einen eigenen Fehlerfall, schickt es eine entsprechende Meldung über das Notlaufansteuersignal 15 an das Notlaufmittel 30 zur Aktivierung der Notlauffunktion wie oben bereits beschrieben. Zur zusätzlichen oder alternativen Überwachung des Steuermittels 10 ist das Überwachungsmittel 20 vorgesehen. Hierbei handelt es sich beispielsweise um einen so genannten Watchdog. Das Steuermittel 10 gibt ein Triggersignal 18 an das Überwachungsmittel 20 ab. Das Überwachungsmittel 20 überprüft das eingehende Triggersignal 18, ob es mit einem erwarteten Triggersignal übereinstimmt. Als Kriterium für einen Fehlerfall könnte beispielsweise eine Frequenzabweichung des Triggersignals 18 herangezogen werden. Erkennt das Überwachungsmittel 20 eine signifikante Abweichung des Triggersignals 18 vom erwarteten Normalzustand, schließt es auf ein defektes Steuermittel 10 und aktiviert mit einem entsprechenden Überwachungsausgangssignal 22 die Notlauffunktion des Notlaufmittels 30. Das Notlaufmittel 30 bewirkt über das Notlaufsteuersignal 36 die Durchschleifung des Notlaufausgangssignals 34 als Ansteuersignal 14 für das Schaltmittel 16, wie oben bereits beschrieben. Das Überwachungsmittel 20 veranlasst jedoch bei dem Ausführungsbeispiel gemäß Figur 1 keinen Reset des Steuermittels 10, es steuert lediglich die Notlauffunktion des Notlaufmittels 30.

Bei dem Ausführungsbeispiel gemäß Figur 2 ist als weiteres Überwachungsmittel des Steuermittels 10 ein zweites Steuermittel 40 vorgesehen. Anhand der gegebenenfalls bidirektionalen Kommunikation, die über die Kommunikationsleitung 44 zwischen dem ersten Steuermittel 10 und dem zweiten Steuermittel 40 geführt wird, überwacht das zweite Steuermittel 40 die Funktionsfähigkeit des Steuermittels 10. Hierzu könnte beispielsweise das zweite Steuermittel 40 Testsignale an das Steuermittel 10 senden, das entsprechende Antwortsignale zurücksendet. Anhand der eingehenden Antwortsignale stellt das zweite Steuermittel 40 fest, ob das Steuermittel 10 noch ordnungsgemäß funktioniert. Sollte die eingehende Antwort des Steuermittels 10 von der erwarteten abweichen, schließt das zweite Steuermittel 40 auf einen fehlerhaften Betrieb und aktiviert über das Notlaufansteuersignal 42 den in dem Notlaufmittel 30 hinterlegten Notbetrieb. Der Notbetrieb stimmt überein mit dem bei Ausführungsbeispiel 1 beschriebenen. Es wird auf die entsprechenden Ausführungen verwiesen. Das zweite Steuermittel 40 übernimmt im Wesentlichen die Funktion des Überwachungsmittels 20 des ersten Ausführungsbeispiels. Somit ist das Überwachungsmittel 20 gemäß Figur 2 von diesen Aufgaben befreit und kann die so genannte Watchdog-Funktion übernehmen. Wiederum überwacht das Überwachungsmittel 20 das Triggersignal 18 auf signifikante, unerwartete Abweichungen. Sollte es zu solchen kommen, schickt das Überwachungsmittel 20 ein entsprechendes Reset-Signal 24 an das Steuermittel 10. Das Steuermittel 10 wird neu hochgefahren. Diesen Reset erkennt das zweite Steuermittel 40 und aktiviert spätestens dann die Notlauffunktion des Notlaufmittels 30. Wie auch in dem Ausführungsbeispiel gemäß Figur 1 kann das Steuermittel 10 selbst die Notlauffunktion des Notlaufmittels 30 aktivieren. Dies könnte dann der Fall sein, wenn das Steuermittel 10 selbst erkennt, dass es fehlerhaft arbeitet und/oder wenn es einen Fehler des zweiten Steuermittels 40 detektiert. Alternativ könnte die Notlauffunktion des Notlaufmittels 30 nach einer vorgebbaren Anzahl von Resetsignalen 24 durch das Überwachungsmittel 20 ausgelöst werden. Die so genannte Watchdog-Funktion des Überwachungsmittels 20 bliebe hierbei erhalten.

Um die Sicherheit weiter zu erhöhen, könnte das Schaltmittel 16 einen Aufbau wie in Figur 3 dargestellt aufweisen. Das Steuermittel 10 würde zwei Signale, das erste und das zweite Ansteuersignal 54, 56 anstelle lediglich eines Ausgangssignals 13 erzeugen. Nur eines der beiden Ansteuersignale 54, 56 müsste fehlersicher (wie oben beschrieben) ausgeführt sein. Das nicht fehlersichere Ansteuersignal muss im Fehlerfall lediglich einen definierten Zustand annehmen. Außerdem empfängt und verarbeitet das Steuermittel 10 das von der Rückführleitung 66 abgegriffene Signal. Um nun ein sicheres Öffnen des Schaltmittels 16 zu gewährleisten, ist mit dem ersten Schaltmittel 58 noch ein drittes Schaltmittel 62 in Reihe verschaltet. Sollte sich beispielsweise das erste Schaltmittel 58 nicht mehr öffnen lassen, so könnte das gewünschte Ausgangssignal noch durch das Öffnen des dritten Schaltmittels 62 erfolgen. Ließe sich das erste Schaltmittel 58 jedoch nicht mehr schließen, so könnte der gewünschte Ausgangszustand durch Schließen des zweiten und des vierten Schaltmittels 60, 64 erreicht werden.

Im Grundzustand, also bei ausgeschalteter Last 50, weisen erstes und zweites Ansteuersignal 54, 56 den Zustand logisch Null auf. In Zusammenwirken mit den beiden Invertern 51, 52 sind das dritte und vierte Schaltmittel 62, 64 geschlossen. Da das erste und zweite Schaltmittel 58, 60 weiterhin geöffnet bleiben, ist die Last 50 deaktiviert.

Soll die Last 50 eingeschaltet werden, wie ein Wechsel des Steuersignals 12 anzeigt, erzeugt das Steuermittel 10 ein zweites Ansteuersignal 56 mit dem Pegel logisch Eins. Dadurch wird das zweite Schaltmittel 60 geschlossen. Der rechte Pfad des Schaltmittels 16 wird nun leitend und damit die Last 50 eingeschaltet. Parallel dazu erfasst das Steuermittel 10 über die Rückführleitung 66 den Zustand der Last 50. Bei ordnungsgemäßem Betrieb des Schaltmittels 16 führt ein Pegel des zweiten Steuersignals 56 von logisch Eins auch zu einer Bestromung der Last 50.

Erkennt jedoch das Steuermittel 10 trotz der gewollten Aktivierung der Last 50 keine gewünschte Wirkung, wechselt es in einen Notbetrieb. Um dem fehlerhaften Zustand abzuhelfen, wird über eine Veränderung des ersten Ansteuersignals 54 in logisch Eins der linke Pfad des Schaltmittels 16 aktiviert. Hierbei wird der erste Schalter 58 geschlossen und dadurch die Last 50 eingeschaltet.

Sollte sich das zweite Schaltmittel 60 im Normalbetrieb "Abschalten" (erstes Ansteuersignal 54 logisch Null, zweites Ansteuersignal 56 logisch Null) trotz entsprechender Ansteuerung nicht öffnen, wird dies ebenfalls über das von der Rückführleitung 66 erfasste Signal erkannt. Dann wird das erste Ansteuersignal 54 auf logisch Eins gesetzt, so dass sich das vierte Schaltmittel 64 öffnet und damit der rechte Pfad deaktiviert ist. Diese Funktionalität kann nun über das erste Ansteuersignal 54 mit entsprechender inverser Logik übernommen werden.

## Patentansprüche

1. Vorrichtung zur sicheren Signalerzeugung, mit einem Steuermittel (10), dem ein Steuersignal (12) zugeführt ist, wobei das Steuermittel (10) in Abhängigkeit von dem Steuersignal (12) zumindest ein erstes und ein zweites Ansteuersignal (54, 56) erzeugt zur Ansteuerung eines Schaltmittels (16), das eine Last (50) aktiviert oder deaktiviert, wobei Erkennungsmittel (10, 66) vorgesehen sind zum Erkennen eines ordnungsgemäßen Betriebs des Schaltmittels (16), wobei die Erkennungsmittel (10, 66) in Abhängigkeit von dem ordnungsgemäßen Betrieb des Schaltmittels (16) das zumindest eine erste und zweite Ansteuersignal (54, 56) beeinflussen, und wobei das Schaltmittel (16) zumindest zwei parallele Pfade mit zumindest jeweils zwei in Reihe verschalteten Schaltmitteln (58, 60; 62, 64) umfasst, **dadurch gekennzeichnet, dass** das erste Ansteuersignal (54) ein Schaltmittel (58) des ersten Pfades ansteuert und hierzu die Vorrichtung mit einem ersten Inverter (51) invertiert ein Schaltmittel (64) des zweiten Pfades ansteuert,

## Claims

1. Device for secure signal generation, having a control means (10) to which a control signal (12) is fed, wherein the control means (10) generates, as a function of the control signal (12), at least a first and a second actuation signal (54, 56) for actuating a switching means (16) which activates or deactivates a load (50), wherein detection means (10, 66) are provided for detecting satisfactory operation of the switching means (16), wherein the detection means (10, 66) influence the at least one first and second actuation signal (54, 56) as a function of the satisfactory operation of the switching means (16), and wherein the switching means (16) comprises at least two parallel paths each with at least two switching means (58, 60; 62, 64) which are connected in series, **characterized in that** the first actuation signal (54) actuates a switching means (58) of the first path, and for this purpose the device with a first inverter (51) actuates in an inverted fashion a switching means (64) of the second path.

## Revendications

1. Dispositif pour générer un signal sûr, comportant un moyen de commande (10) qui reçoit un signal de commande (12),
en fonction du signal de commande (12), le moyen de commande (10) génère au moins un premier et un second signal de commande (54, 56) pour commander un moyen de commutation (16) qui active ou neutralise une charge (50),
des moyens de détection (10, 66) étant prévus pour détecter le fonctionnement correct du moyen de commutation (16),
les moyens de détection (10, 66) influençant au moins un premier et un second signal de commande (54, 56) selon le fonctionnement correct du moyen de commutation (16) et
le moyen de commutation (16) comporte au moins deux chemins parallèles avec au moins chaque fois deux moyens de commutation (58, 60 ; 62, 64) branchés en série,
**caractérisé en ce que**
le premier signal de commande (54) commande un moyen de commutation (58) du premier chemin et pour cela le dispositif avec un premier inverseur (51) inverse un moyen de commutation (64) du second chemin.
